# EUROPEAN PATENT APPLICATION

(11) **EP 2 530 735 A1**
(43) Date of publication of application: **05.12.2012**
(21) Application number: 11737039.5
(22) Date of filing: 26.01.2011
(51) Int. Cl.: H01L 31/042, H01M 10/44, H02J 7/35

(54) **SOLAR CELL POWER SUPPLY**

(30) Priority: 28.01.2010 JP 2010017498
(71) Applicant: Sanyo Electric Co., Ltd., Osaka 570-8677 (JP)
(72) Inventor: MIYAMAE, Ichiro, Moriguchi-shi Osaka 570-8677 (JP); UEHARA, Yuji, Moriguchi-shi Osaka 570-8677 (JP); KAWABATA, Katsuhiko, Moriguchi-shi Osaka 570-8677 (JP); MATSUO, Yuki, Moriguchi-shi Osaka 570-8677 (JP)
(74) Representative: Hertz, Oliver
(86) International application number: PCT/JP2011/051474
(87) International publication number: WO 2011/093326

(57) **Abstract**

A battery pack (40) includes battery modules, a flat battery box (20), and a solar panel (10). The modules are arranged in parallel to each other. Each module includes cylindrical rechargeable battery cells (41) that are arranged side by side in the longitudinal direction of the cells. One of the cells is serially connected to another one of the cells arranged adjacent to this one of the cells in the longitudinal direction. The box (20) accommodates the battery pack (40). The panel (10) includes solar cells (41) capable of generating power for charging the pack (40). The box (20) is arranged on the back surface of the panel (10). The panel (10) and the pack (40) are arranged substantially in parallel to each other so that the distances between the parts of panel (10) and the pack (40) are substantially fixed. The modules are held in a non-horizontal orientation.

## Description

### Technical Field

The present invention relates to a solar battery power supply device that can store electric power generated by sunlight in a rechargeable battery, and in particular to a solar battery power supply device that can charge a rechargeable battery with output electric power generated by a solar battery and supply electric power from the rechargeable battery to a light or the like in the nighttime.

### Background Art

In terms of environmental issues such as CO₂ reduction, a lighting device have been proposed which stores electric power generated by using natural energy sources without using fossil fuels and uses the stored electric power. In particular, in mountain-ringed regions and the like, an independent type lighting device is used which stores electric power generated by a solar battery in a storage battery in the daytime, and supplies electric power stored in the storage battery to a light in the nighttime (for example, see Patent Literature 1). Fig. 21 is a side view showing a lighting device disclosed in Patent Literature 1.

### Citation List

### Patent Literature

Patent Literature 1: Japanese Patent Laid-Open Publication No. JP 2003-273,387 A
Patent Literature 2: Japanese Utility Model Laid-Open Publication No. S61-206,209 A

### Summary of Invention

### Technical Problem

In the case where lighting devices are used as street lights or the like, the lighting devices are often fastened to the top end of an upright tall pole. In this arrangement, although a lighting device can effectively receive sunlight, there is a problem that wind is likely to inversely affect the lighting device. Since solar panels have a flat shape, wind is likely to inversely affect the solar panels. In addition, in the case where storage batteries are attached to the flat solar panels, wind is more likely to inversely affect the solar panels with storage batteries. If the solar panels with storage batteries are subjected to strong wind, the solar panels with storage batteries may receive a strong wind force.

Also, only the sunlight can charge the storage battery of the aforementioned lighting device. For this reason, it is important to surely store a required amount of electric power. If a sufficient amount of electric power is not be stored in the daytime, the electric power stored in the storage battery will be short, which in turn may bring the light OFF in the night. In particular, the intensity and the number of hours of sunshine will be small in the winter. For this reason, it is difficult to surely store a sufficient amount of electric power.

Also, in terms of charging characteristics of rechargeable batteries, there is a problem that the charging efficiency is low in low temperature. In particular, the daytime is short, while the nighttime is long in the winter. In addition, the charging efficiency decreases in the winter. Accordingly, the charging amount tends to be small. As a result, it is difficult constantly bring the light ON in the winter. To address this problem, a system has been proposed which uses commercial power as back-up power supply. However, there are users' demands to effectively use natural energy sources as long as possible. On the other hand, it is not easy to install electric wires for commercial power in mountain-ringed regions, or the like.

As discussed above, in order to surely bring the light ON for certain hours throughout the year, it is necessary to suppress decrease of the charging efficiency in particular in the winter.

The present invention is devised to solve the above problems. It is a main object of the present invention to provide a solar battery power supply device that can reduce inverse influences of wind.

Also, it is another object of the present invention to provide a solar battery power supply device that can efficiently charge a storage battery even in the winter.

### Solution to Problem and Advantageous Effects of Invention

To solve the above object, a solar battery power supply device according to a first aspect of the present invention includes a battery pack, a flat battery box, and a solar panel. The battery pack includes a plurality of battery modules that are arranged in parallel to each other. Each of the plurality of battery modules includes a plurality of rechargeable battery cells that can be arranged adjacent to each other in the longitudinal direction of the rechargeable battery cells. One of the rechargeable battery cells can be serially connected to another one of the rechargeable battery cells that is arranged adjacent to this one of the rechargeable battery cells in the longitudinal direction. The flat battery box accommodates the battery pack. The solar panel includes a plurality of solar cells capable of generating electric power for charging the battery pack. The battery box is arranged on the back surface of the solar panel. The solar panel and the battery pack are arranged substantially in parallel to each other so that the distances between the parts of the solar panel and the battery pack are substantially fixed. The battery modules of the battery pack are held in a non-horizontal orientation. According to this construction, the solar panel serves as a power generator, while the battery pack serves as an electric power storage. As a result, it is possible to provide a power supply device that does not require external power supplies. In addition, since the solar panel and the battery box are arranged in parallel to each other, it is possible to provide a thin plate-shaped solar battery power supply. Therefore, it is possible to reduce inverse influences of wind on the solar battery power supply, and provide a simple outward appearance.

Also, since the battery pack is arranged together with the solar panel, the battery pack can be evenly warmed by heat generated by the solar panel. Accordingly, it is possible to improve the charging efficiency particularly in winter. In addition, since cylindrical battery cells are arranged adjacent to each other in the longitudinal direction of the rechargeable battery cells in the battery module, air can be moved in the battery box circulates by natural convection. Accordingly, it is possible to prevent that the battery cells are over-heated. Therefore, there is an advantage that the battery cells can be efficiently used throughout the year.

Also, the storage battery is located in a relatively cool position, in other words, the position that is located on the back surface of the solar panel (in the shade) and is likely to be blown by wind. Therefore, it is possible to prevent that the storage battery temperature rises too much in summer.

In a solar battery power supply device according to a second aspect of the present invention, a support pole can be further provided which holds the solar panel in an inclined orientation. The battery box can be fastened to a part of the back surface of the solar panel positioned higher than the attachment position of the support pole in the back surface of the solar panel. According to this construction, when the solar battery power supply device is blown by wind, it is possible to avoid that the battery box is located behind the support pole as viewed in the wind direction. Accordingly, wind can directly hit the battery box. Therefore, it is possible to suppress the temperature rise in the storage battery in summer.

In a solar battery power supply device according to a third aspect of the present invention, not more than two layers of battery modules can be arranged as the battery modules of the battery pack in the thickness direction of the battery box. According to this construction, the thickness of the battery box can be small so that the exterior shape of the solar battery power supply device can be thin as a whole. In addition, the distance difference between the battery cells and the solar panel can be small irrespective of positions of the battery cells. Therefore, there is an advantage that the battery pack can be uniformly warmed by the solar panel. Additionally, heat can be suitably and effectively dissipated from the battery cells.

In a solar battery power supply device according to a fourth aspect of the present invention, a base portion can be further provided. The solar panel and the battery box can be fastened onto the upper and lower surface of the base portion, respectively. According to this construction, the solar panel can be supported by the base portion arranged on the back surface of solar panel, while the battery box can be fastened to the base portion. Since the base portion can serve to hold the solar panel and the battery box, and have attachment structures for the solar panel and the battery box, the solar panel and the battery box can be simplified.

In a solar battery power supply device according to a fifth aspect of the present invention, a fastening mechanism can be further provided which detachably attaches the battery box to the back surface of the base portion. According to this construction, there is an advantage that the battery box can easy to attach, replace and maintain even in the case where the battery box is located in an elevated place such as the top of street light.

In a solar battery power supply device according to a sixth aspect of the present invention, the fastening mechanism can include a rectangular U-shaped part, and a rectangular U-shaped part interlocking opening. The rectangular U-shaped part has a rectangular U shape as viewed in section, and is fastened to the upper surface of the battery box. The rectangular U-shaped part interlocking opening is opened in the back surface of the base portion, and dimensioned to interlock with the rectangular U-shaped part. The battery box can be detachably fastened to the base portion by the fastening mechanism. According to this construction, the battery box can be easily detachably attached to the base portion by interlocking the rectangular U-shaped part with the rectangular U-shaped part interlocking opening.

In a solar battery power supply device according to a seventh aspect of the present invention, the fastening mechanism can be a hanger mechanism that includes an interlocking protrusion and an interlocking opening. The interlocking protrusion can be inserted into the interlocking opening. The hanger mechanisms can be arranged as the fastening mechanism at the four corner parts of the battery box. The battery box can be detachably fastened to the base portion by the hanger mechanisms. According to this construction, the battery box can be attached/detached onto/from the back surface of the solar panel by using this mechanism. As a result, this mechanism is advantageous not only in attachment but also in maintenance such as replacement. Therefore, it is possible to improve service-person safety.

In a solar battery power supply device according to an eighth aspect of the present invention, a battery cover can be further provided which covers the battery box with the battery box being fastened onto the back surface of the solar panel. According to this construction, since the battery box is covered by the battery cover, the battery cell can be protected from wind, rain, snow, and the like, by the double covering structure.

In a solar battery power supply device according to a ninth aspect of the present invention, the battery box can be formed of a metal having good thermal conductivity. According to this construction, the surface of the battery box can serve as a heat-dissipating plate. Therefore, this construction is advantageous to cool the battery pack by using air. In particular, solar panels are often installed in an elevated place. Accordingly, in the case where the battery box is arranged in a wind-blowing elevated place and is exposed outside air, it is possible to suppress temperature rise in summer.

In a solar battery power supply device according to a tenth aspect of the present invention, the inclination angle of the solar panel can be greater than an installation angle that provides the maximum annual electric power generation amount at the installation place of this solar battery power supply device. According to this construction, since the sunlight is incident at an angle close to a right angle on the solar panel in winter as compared with in summer, the battery cell can particularly efficiently be warmed in winter. Therefore, although the charging efficiency will be low in winter, it is possible to provide relatively high charging efficiency even in winter.

In a solar battery power supply device according to an eleventh aspect of the present invention, a charge/discharge control portion can be further provided which controls a charging current or a charging voltage for charging the battery pack with electric power generated by the solar panel. According to this construction, although the amount of electric power varies which is generated by the solar panel, electric power can be stably supplied to the battery pack. Therefore, it is possible to safely charge the battery pack.

In a solar battery power supply device according to a twelfth aspect of the present invention, a lighting portion can be further provided which is driven by the battery pack. According to this construction, it is possible to provide an independent lighting device that has electric power generating function.

In a solar battery power supply device according to a thirteenth aspect of the present invention, the lighting portion can include light emitting diodes. According to this construction, the lighting portion can be a low power consumption light. Therefore, it is advantageous in terms of lighting time extension in the nighttime.

In a solar battery power supply device according to a fourteenth aspect of the present invention, the lighting means can be a street light. According to this construction, since electric power can be generated and stored in the daytime, and can drive the lighting portion in the nighttime, it is possible to provide an environmentally friendly street light.

In a solar battery power supply device according to a fifteenth aspect of the present invention, the charging voltage for charging the battery cell can be set at a voltage lower than the criterion voltage by which to determine whether the battery cell is fully-charged based on of the previously investigated characteristics of the battery cell. According to this construction, the battery cells are less likely to be overloaded, and can have a longer life. Therefore, it is possible to provide a maintenance-free power supply device.

In a solar battery power supply device according to a sixteenth aspect of the present invention, the battery cells can be lithium-ion rechargeable batteries. According to this construction, since the capacity density can be increased, the size and weight of the battery pack can be suppressed. Therefore, it is advantageous in particular in an elevated power supply device. In addition, since an endothermic reaction occurs in charging operation, it is possible to prevent the battery cells from overheating.

In a solar battery power supply device according to a seventeenth aspect of the present invention, the rated voltage of the battery pack can be 0.7 to 0.9 time the maximum output operating voltage of the solar panel at 25°C. According to this construction, the operating voltage of the solar panel can be specified to a proper voltage in consideration of influence of battery pack voltage on solar cell operating voltage.

In a solar battery power supply device according to an eighteenth aspect of the present invention, a charge available temperature range of the battery cell can be set into a range different from a discharge available temperature range. The discharge available temperature range can extend on the low temperature side relative to the charge available temperature range. According to this construction, it is possible to efficiently discharge also in the nighttime in which the battery cell temperature generally becomes lower as compared with the battery cell temperature when the battery cell is charged in the daytime.

In a solar battery power supply device according to a nineteenth aspect of the present invention, the battery cell can have a cylindrical exterior shape.

### Brief Description of Drawings

Fig. 1: Perspective view showing the outward appearance of a solar battery power supply device as viewed from the front side.
Fig. 2: Exploded cross-sectional view showing a solar panel shown in Fig. 1.
Fig. 3: Schematic cross-sectional view showing the solar panel shown in Fig. 1 taken along the line III-III'.
Fig. 4: Perspective view showing the solar battery power supply device shown in Fig. 1 as viewed from the back surface side.
Fig. 5: Perspective view showing the solar battery power supply device shown in Fig. 4 with a battery cover being removed whereby exposing a battery box.
Fig. 6: Perspective view showing the outward appearance of the battery box as viewed from the upper side.
Fig. 7: Perspective view showing the battery box shown in Fig. 6 as viewed from the lower side.
Fig. 8: Perspective view showing the front surface of the battery box shown in Fig. 6 as viewed from the lower side.
Fig. 9: Horizontal cross-sectional view showing the battery box shown in Fig. 6 taken along the line IX-IX.
Fig. 10: Exploded perspective view showing the battery box shown in Fig. 6 with an outer case being removed.
Fig. 11: Exploded perspective view showing the battery box shown in Fig. 10 with a battery pack being further removed from a waterproof bag.
Fig. 12: Perspective view showing the battery pack as viewed from the front side.
Fig. 13: Exploded perspective view showing the battery pack shown in Fig. 12 with battery cells in the top row being detached from battery holders.
Fig. 14: Perspective view showing a bending process of a lead plate.
Fig. 15: Cross-sectional view showing a battery box according to a modified embodiment.
Fig. 16: Cross-sectional view showing a solar battery power supply device according to a modified embodiment.
Fig. 17: Cross-sectional view showing a solar battery power supply device according to a reference example.
Fig. 18: Perspective view showing a solar battery power supply device according to a modified embodiment as viewed from the back surface side.
Fig. 19: Perspective view showing a solar battery power supply device according to another modified embodiment as viewed from the back surface side.
Fig. 20: Schematic view showing a solar battery power supply device which is adopted to a bicycle shed.
Fig. 21: Side view showing a conventional solar battery power supply device.

### Description of Embodiment(s)

The following description will describe embodiment(s) according to the present invention with reference to the drawings. It should be appreciated, however, that the embodiment(s) described below are illustrations of a solar battery power supply device used therein to give a concrete form to technical ideas of the invention, and a solar battery power supply device of the invention is not specifically limited to description below. Furthermore, it should be appreciated that the members shown in claims attached hereto are not specifically limited to members in the embodiment(s). Unless otherwise specified, any dimensions, materials, shapes and relative arrangements of the members described in the embodiment(s) are given as an example and not as a limitation. Additionally, the sizes and the positional relationships of the members in each of drawings are occasionally shown larger exaggeratingly for ease of explanation. Members same as or similar to those of this invention are attached with the same designation and the same reference signs, and their description is omitted. In addition, a plurality of structural elements of the present invention may be configured as a single part that serves the purpose of a plurality of elements, on the other hand, a single structural element may be configured as a plurality of parts that serve the purpose of a single element. Also, the description of some of examples or embodiment(s) may be applied to other examples, embodiment(s) or the like.

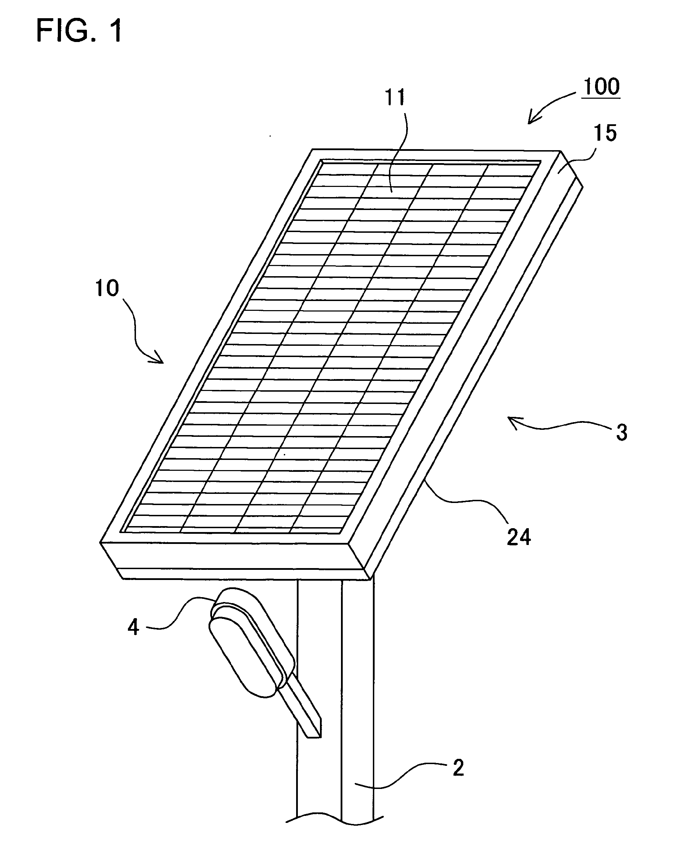

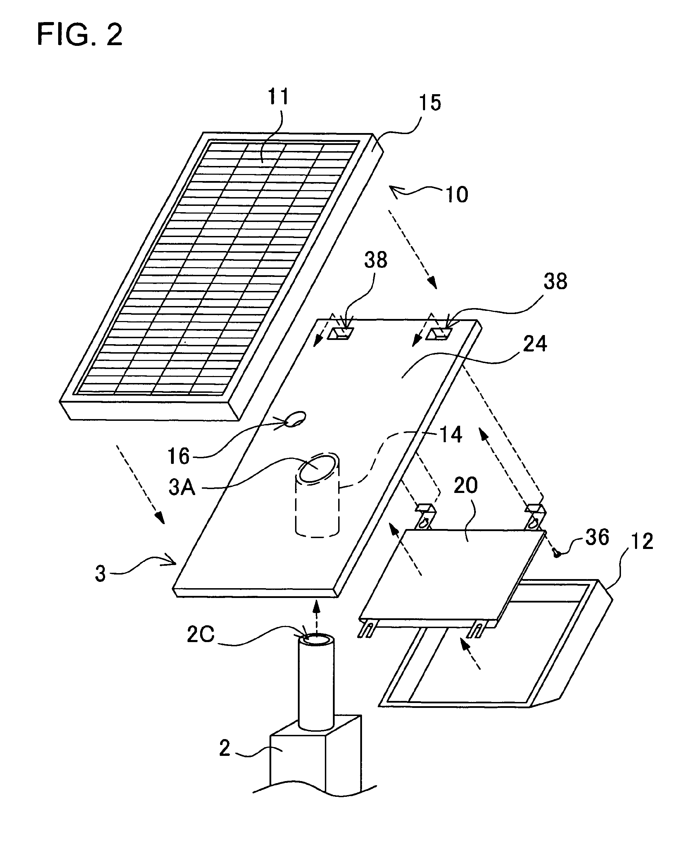

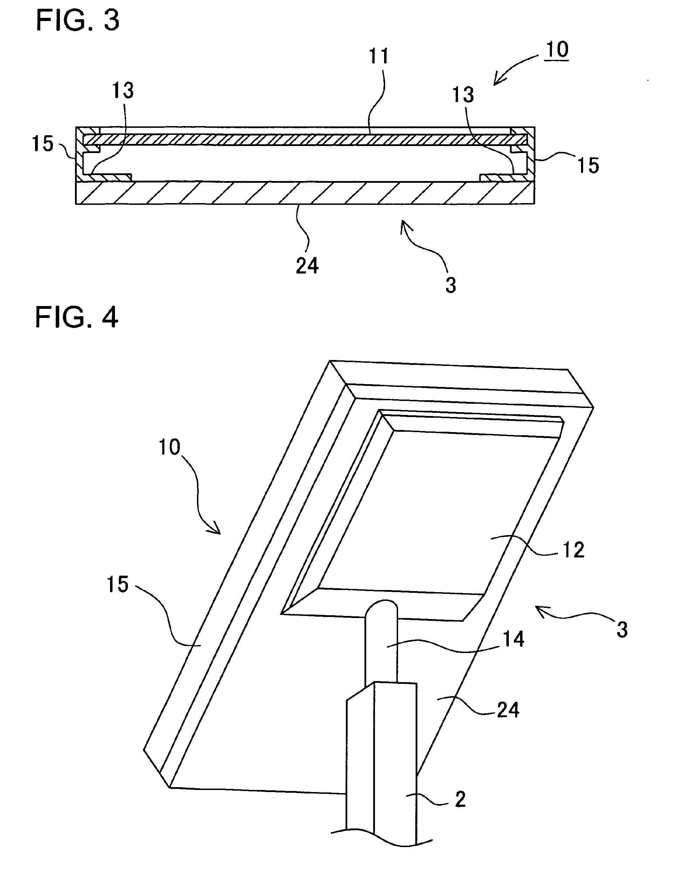

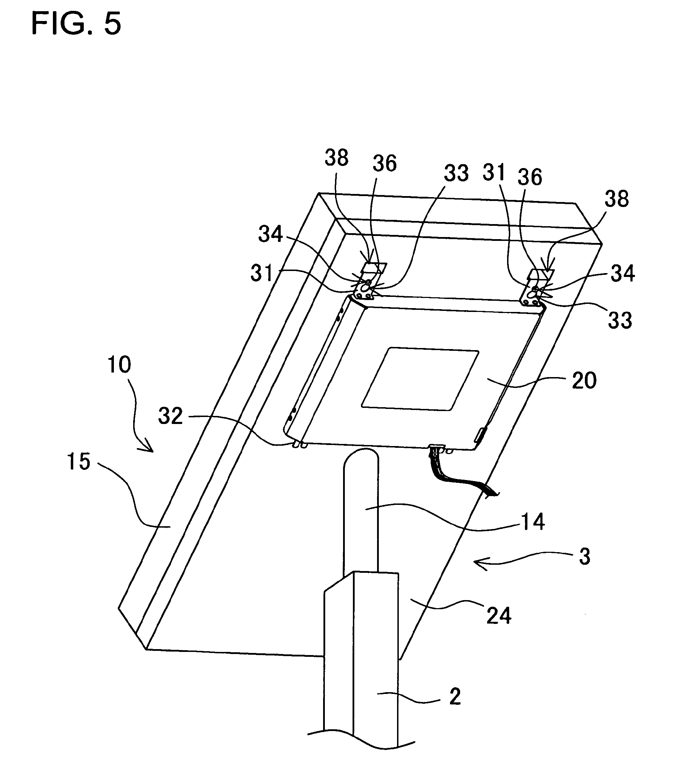

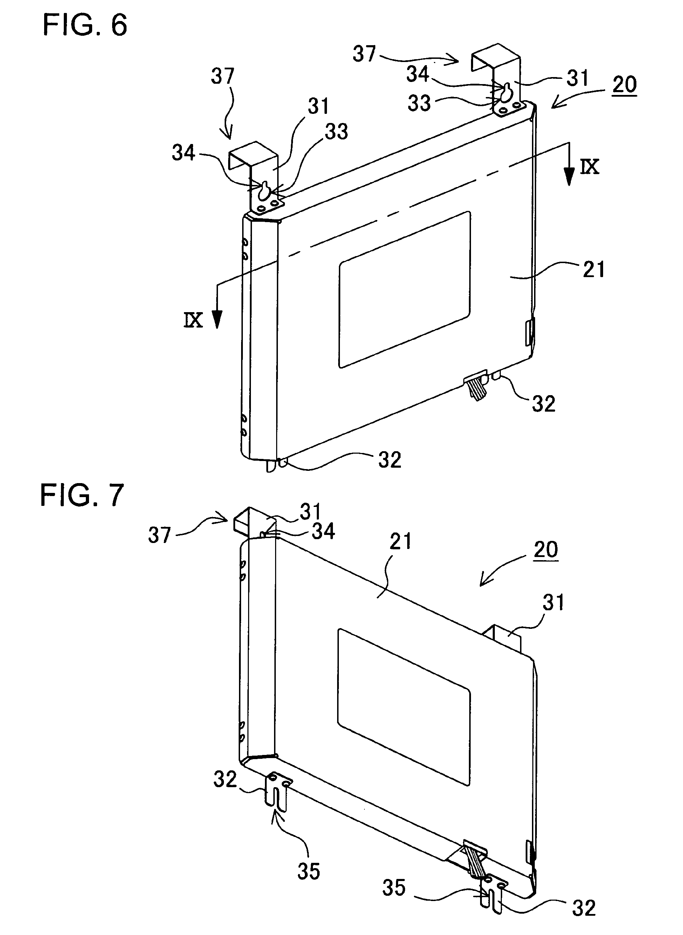

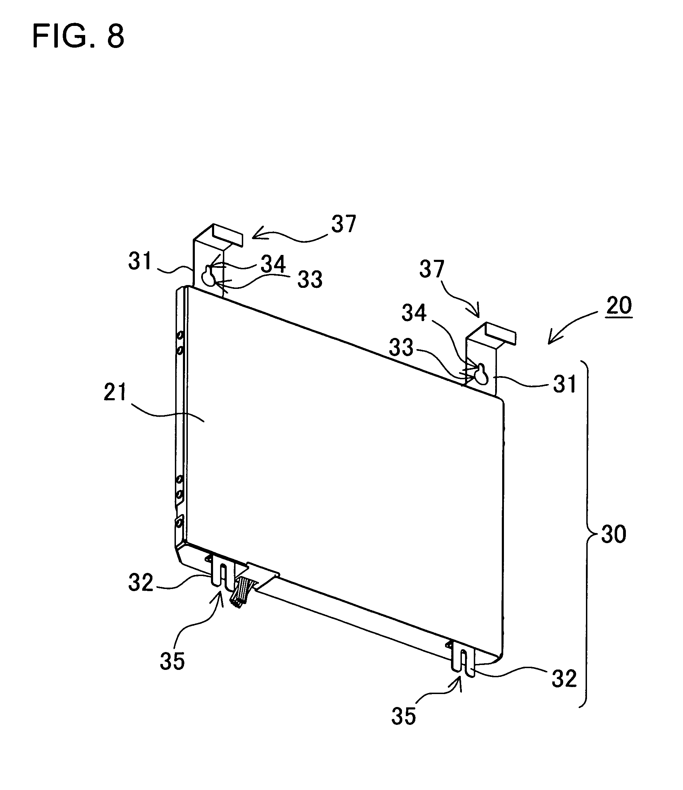

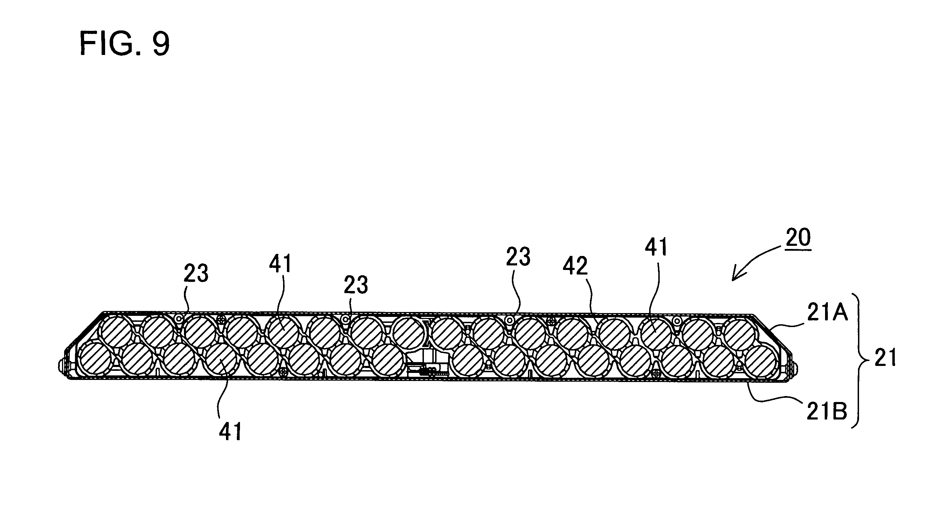

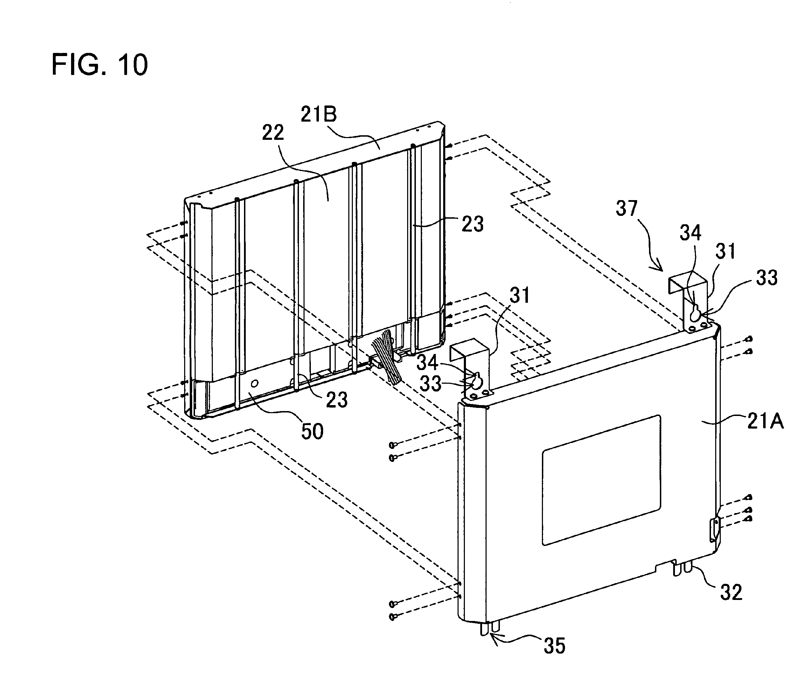

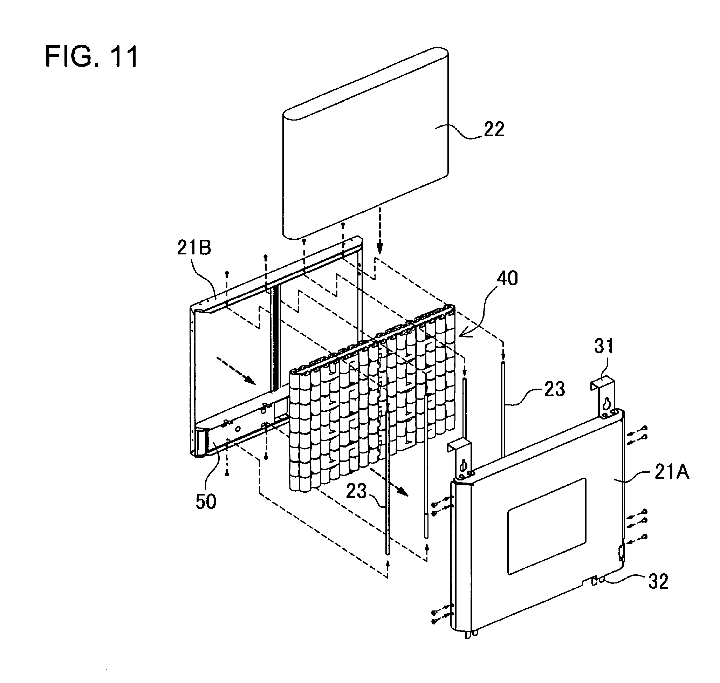

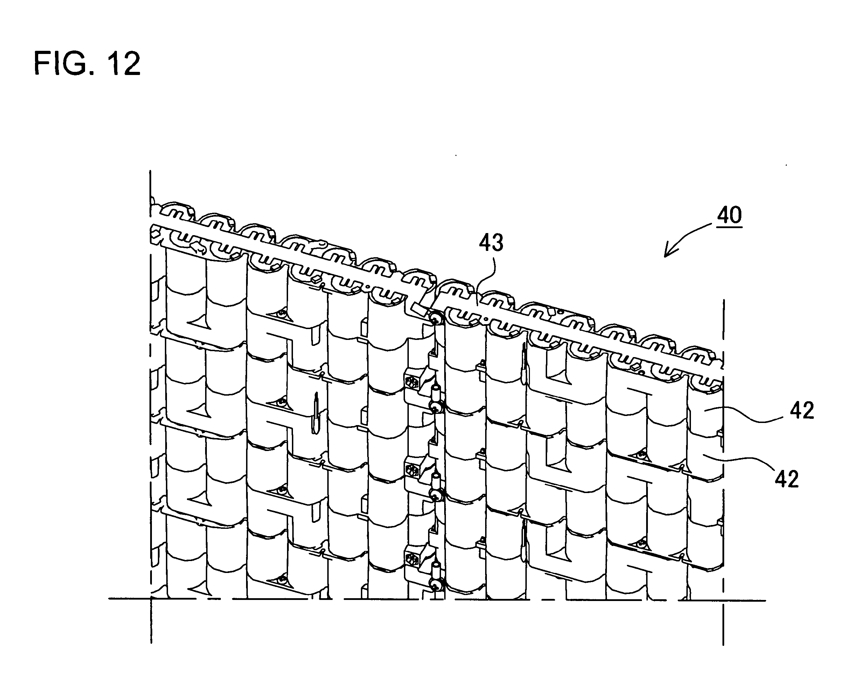

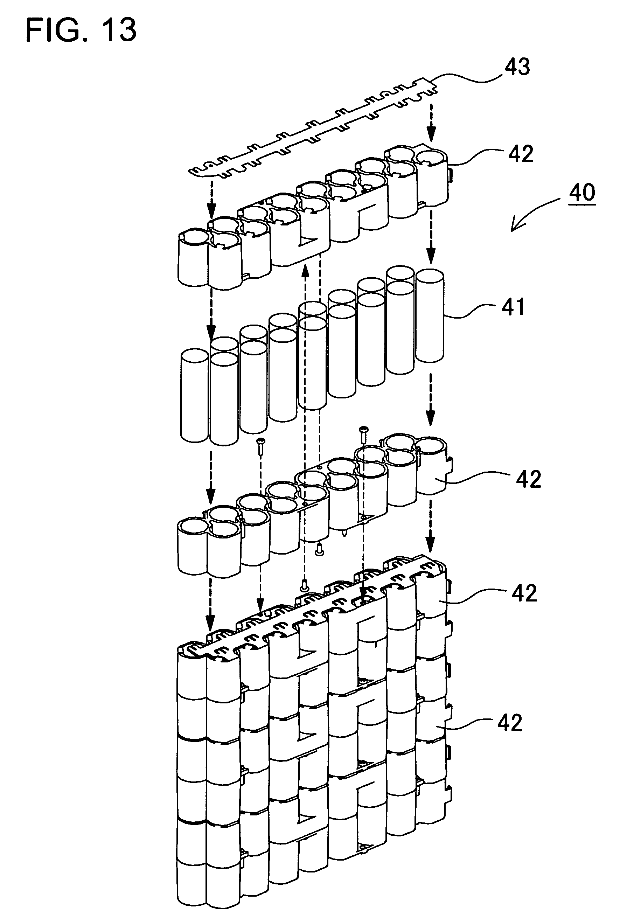

A solar battery power supply device 100 according to an embodiment of the present invention will be described with reference to Figs. 1 to 13. Fig. 1 is a perspective view showing the outward appearance of the solar battery power supply device as viewed from the front side. Fig. 2 is an exploded cross-sectional view showing the solar panel shown in Fig. 1. Fig. 3 is a schematic cross-sectional view showing the solar panel shown in Fig. 1 taken along the line III-III'. Fig. 4 is a perspective view showing the solar battery power supply device shown in Fig. 1 as viewed from the back surface side. Fig. 5 is a perspective view showing the solar battery power supply device shown in Fig. 4 with a battery cover being removed whereby exposing a battery box. Fig. 6 is a perspective view showing the outward appearance of the battery box as viewed from the upper side. Fig. 7 is a perspective view showing the battery box as viewed from the lower side. Fig. 8 is a perspective view showing the front surface of the battery box as viewed from the lower side. Fig. 9 is a horizontal cross-sectional view showing the battery box shown in Fig. 6 taken along the line IX-IX. Fig. 10 is an exploded perspective view showing the battery box shown in Fig. 6 with an outer case being removed. Fig. 11 is an exploded perspective view showing the battery box shown in Fig. 10 with a battery pack being additionally removed from a waterproof bag. Fig. 12 is a perspective view showing the battery pack as viewed from the front side. Fig. 13 is an exploded perspective view showing the battery pack shown in Fig. 12 with battery cells in the top row being detached from battery holders.

The illustrated solar battery power supply device 100 is illustratively applied to a street light power supply device. Accordingly, the solar battery power supply device 100 is secured to the top end of a support pole. As shown in Figs. 1 and 2, the street light includes a base portion 3, the solar battery power supply device 100, and a lighting portion 4. The base portion 3 is secured to the top end of a sectionally-rectangular support pole 2 with the base portion 3 being inclined. The solar battery power supply device 100 has a rectangular shape in section, and is secured to the base portion 3. The lighting portion 4 is secured to the support pole 2 on the lower side of the solar battery power supply device 100. In the solar battery power supply device 100, a solar panel 10 is exposed on the upper surface of the base portion 3, which is formed of metal and has a rectangular plate shape. A battery box 20 is secured onto the back surface of the base portion 3, and accommodates the battery pack as shown in Figs. 2 and 5. As shown in Fig. 2 and 4, a battery cover 12 covers the outside of the battery box 20 for protecting battery cells 41 from wind, rain, snow, and the like by using a double covering structure. In the solar battery power supply device 100, the solar panel 10 receives sunlight in the daytime and generates electric power. A battery pack is charged with the electric power. The lighting portion 4 is driven with this stored electric power. Accordingly, the street light can be lighted in the nighttime without commercial power. Therefore, it is possible to provide an independent street light with power generating function.

### (Solar Panel 10)

A number of solar cells are arranged in a flat plane in the solar panel 10. The solar panel 410 is a flat panel (solar panel) the solar cell surface of which is exposed as sunlight-receiving surface in the solar panel 410. The inclination angle of the solar panel 10 is specified by the angle between the solar panel 10 and the support pole 2.

The solar panel 10 includes a rectangular plate-shaped panel portion 11, and an outer frame 15 that is formed of the aluminum alloy or the like and encloses the outer periphery of the panel portion 11. In the panel portion 11, solar cells are interposed between a transparent tempered glass plate and a film. The transparent glass plate is arranged on the light-receiving surface side as the upper surface side. The film is arranged on the back surface side. Gap space between solar cells and the transparent tempered glass plate and the film is filled with transparent resin. In addition, the outer frame 15 includes substantially L-shaped protruding portions 13 as viewed in section at four corner parts on longer edges as shown in the cross-sectional view of Fig. 3. In order to secure the protruding portions 13 to the base portion 3, the internally-threaded portions are formed in the surface parts of the protruding portions 13 by using a well-known member. Accordingly, the protruding portions 13 can be secured by bolts inserted from the back surface side of the base portion 3.

The base portion 3 includes a substantially rectangular flat plate 24 that is formed of metal (iron, etc.), and a cylindrical coupling portion 14 that is secured to substantially the central part of the flat plate 24 by welding, or the like. The width of the plate 24 is specified so that the solar panel 10 can be installed on the plate 24 of the base portion 3 as shown in the cross-sectional view of Fig. 3. As shown in the exploded perspective view of Fig. 2, a cylindrical coupling portion 2C is arranged at in the top end of the support pole 2, and receives the coupling portion 14. The coupling portion 14 is inserted into the cylindrical coupling portion 2C and is secured by a known securing member such as screw from the outside.

An opening 3A is formed in the plate 24, and communicates with the support pole 2. Electric cords from the battery box 20 are wired from the back surface side of the plate 24 to the upper surface of the plate 24 side, that is, to the solar panel 10 side through another opening 16, and are then drawn into the support pole 2 through the aforementioned opening of the plate 24. The output cords from the solar panel 10 are wired to the battery box 20 through the another opening 16.

Although the optimum inclination angle is known which can supply the annual maximum generated electric power amount in accordance with the latitude of the place where the solar panel 10 is installed, it is preferable that the inclination angle of the solar panel 10 according to this embodiment be greater than the known optimum inclination angle. In consideration of seasonal solar elevation angles, it is preferable that the inclination angle be greater in winter and be smaller in summer. In this embodiment, since the inclination angle is greater than the typical inclination angle, the generated electric power amount can be increased particularly in winter. Since the inclination angle is thus specified, the generated electric power amount is reduced as compared with the typical inclination angle in summer. However, the solar radiation time is sufficient. For this reason, problems hardly arise in terms of night illumination, illumination time, and the like. On the other hand, since the inclination angle is specified suitably for winter, the solar panel 10 can receive a larger amount of heat from sunlight in winter. The heat by sunlight can cause the temperature of the battery cells to rise, and can improve generated electric power. Accordingly, it is possible to suppress that low temperature of battery cells reduces the charged amount of the battery cells, that is, reduces electric power. On the other hand, it is possible to suppress heat quantity that is received by the solar panel in summer. As a result, it is possible to surely supply electric power in winter and to suppress the temperature rise in summer.

The solar cell can be amorphous silicon group solar cell, crystalline silicon group solar cell, hybrid (HIT) type solar cell of amorphous silicon group and crystalline silicon group solar cells, compound group solar battery such as GaAs or CIS group solar battery, or organic group solar battery. Since the temperature coefficients of these types of solar batteries are small, it is advantageous that these types of solar batteries have small seasonal variation of the maximum output operation voltage Vop of the solar panel 10. For this reason, the voltage design can be easy to efficiently charge the battery pack through the seasons.

### (Battery Box 20)

The battery box 20 is secured onto the back surface of the solar panel 10. The battery box 20 has a low (flat) box external shape as shown in Figs. 6 to 9, etc. The attachment surface of the battery box 20 is flat to be attached onto the solar panel 10. As also shown in Fig. 6, the side surfaces of battery box 20 are tapered toward the back surface for reducing air resistance. The battery box 20 includes a metal exterior case 21 that is arranged on the exterior side and has excellent thermal conductivity. A set of attachment portions 30 are arranged at the four corner parts of the battery box for attachment of the battery box to the solar panel 10. This battery box 20 is secured substantially in parallel to the solar panel 10 through the set of metal attachment portions 30. Thus, even after the battery box 20 is attached to the solar panel 10, the solar panel 10 and the battery box 20 can integrally form a flat shape. As a result, the solar battery power supply device 100 can have a thin outward appearance. The battery pack accommodated in the battery box 20 is arranged spaced at a distance away from and in substantially parallel to the solar panel 10. As a result, the battery cells 41 can be uniformly warmed by heat received from sunlight by the solar panel 10. Therefore, the charging efficiency can be improved especially in winter. Since the solar battery power supply device is designed so that the temperature of the battery pack 40 may not exceed the available highest charging temperature in summer and may not be lower than the available lowest charging temperature in winter, the rechargeable batteries can be efficiently used.

In addition, it is preferable that the battery box 20 be arranged on the back surface of the solar panel 10 higher than the attachment portion of the support pole 2 as shown in Fig. 5. In this case, the support pole 2 is less likely to interrupt wind to hit the battery box 20. Accordingly, the battery box 20 will be blown by air. Therefore, it is possible to suppress the temperature rise of the battery box 20 especially in summer.

### (Battery Pack 40)

A plurality of rechargeable cylindrical battery cells 41 are arranged in the battery box 20. As shown in Figs. 10 to 13, etc., a plurality of battery modules are arranged in parallel to each other. Each of the plurality of battery modules includes a plurality of rechargeable battery cells 41 that are arranged adjacent to each other in the longitudinal direction of the rechargeable battery cells. One of the rechargeable battery cells is serially connected to another one of the rechargeable battery cells arranged adjacent to this one of the rechargeable battery cells in the longitudinal direction in each of the plurality of battery modules. The plurality of battery modules are arranged in a plurality of columns in parallel to each other in the battery pack 40. The battery modules are arranged in a non-horizontal orientation. That is, the battery modules are orientated so that the cylindrical battery cells 41 are held in the longitudinal orientation as shown in Fig. 13. Accordingly, natural convection can facilitate air to flow in the battery box 20 as discussed later. It is possible to avoid that the temperature in the battery box becomes too high. Therefore, the battery cell 41 can be efficiently driven throughout the year.

### (Battery Cell 41)

The cylindrical or tube-shaped battery cells 41 are orientated so that their center axes are parallel to each other. Rechargeable batteries such as lithium ion batteries, nickel metal hydride batteries, nickel-cadmium batteries can be suitably used as the battery cells 26. In particular, lithium-ion rechargeable batteries are preferably used. Since lithium-ion rechargeable batteries have high capacity density, it is possible to reduce the size and weight of the battery cells to a size and a weight that allow the battery cells to be attached onto the back surface of the solar panel 10. In addition, lithium-ion rechargeable batteries have the property of causing an endothermic reaction in charging operation. The endothermic effect will be remarkable especially in the case where lithium-ion rechargeable batteries are charged at high charging rate. As a result, it is possible to suppress that battery temperature becomes too high in summer in which the charging rate will be higher. On the other hand, it is possible to suppress battery temperature drop in winter in which the charging rate will be lower. The charging/discharge available temperature range of lithium-ion rechargeable batteries is wider than lead-acid batteries and nickel-hydrogen batteries. Therefore, lithium-ion rechargeable batteries can be efficiently charged/discharged throughout the year. In addition to cylindrical or tube shape, the battery cell can be a rectangular battery that has a thick sectionally rectangular plate shape.

It is preferable that an iron phosphate group material be used for the positive terminal material of the battery cell 41. In this case, the safety can be improved. Also, the temperature dependency of the charging/discharging operation can be suppressed. Also, the charging/discharging operation efficiency can be kept relatively high in particular even in low temperature range. Therefore, the thus-constructed battery cell can be efficiently charged/discharged.

Also, the positive terminal of the lithium-ion rechargeable battery can be a three-component positive terminal. Mixture of Li-Ni-Mn-Co composite oxide and cobalt acid lithium are used for the positive terminal of the lithium-ion rechargeable battery instead of lithium cobaltate as a conventional material. In the case where three compositional material of Ni-Mn-Co is used for the positive terminal of the lithium-ion rechargeable battery in addition to lithium, the battery can be highly stable in thermal characteristics even if charged at high voltage. The maximum charging voltage can be increased to 4.3 V, and the capacity of the battery can be increased.

However, it is preferable that the voltage in the charging operation of the battery cell 41 to be used be intendedly set at a voltage lower than a voltage at which it is determined that the battery cell is brought in the fully-charged state. For example, in the case where lithium-ion rechargeable batteries are used, it is generally determined that the lithium-ion rechargeable batteries are brought in the fully-charged state when the voltage of the lithium-ion rechargeable batteries reaches about 4.2 V. However, according to this embodiment, it is determined that the lithium-ion rechargeable batteries are brought in the fully-charged state when the voltage of the lithium-ion rechargeable batteries reaches 4 V. In this case, the life of the battery cell 41 can be improved.

It is preferable that the rated voltage as nominal voltage of the battery pack 41, which includes the battery cells 40, be set at a voltage lower than the maximum output operation voltage Vop of the solar panel 10. In the case of lithium-ion rechargeable batteries, the rated voltage can be obtained by multiplying about 3.7 to 4.0 V/cell by the number of the battery cells that are connected serially to each other. It is preferable that the rated voltage of the battery pack is set at 70 to 90% of Vop. The reason is that, since the operation voltage of the solar panel is influenced by the voltage of the battery pack 40, charging electric power will be short if the rated voltage of the battery pack is away from Vop. Also, as compared with the depth of discharge of the battery pack 40, the voltage of the solar panel 10 will be higher. For this reason, in order to fully charge the battery pack, it is more preferable that the rated voltage of the battery pack be close to Vop when the battery pack becomes close to the fully-charged state. In addition, in consideration of voltage variation of the solar panel 10 with temperature, it is required to properly specify the voltage of the battery pack 40. For this reason, it is more preferable that the voltage of the battery pack fall within the aforementioned voltage range.

Also, in this embodiment, in the case where the voltage of the battery pack falls within the aforementioned voltage range, a DC/DC converter for charging operation of the battery cell 41 can be eliminated. Therefore, in this case, it is possible to suppress electric power loss in such a DC/DC converter. Accordingly, the battery pack can be efficiently charged. Also, replacement of such a DC/DC converter can be eliminated. Also, the component count can be reduced. As a result, it can be expected that the failure rate be reduced, that the reliability be improved, that the cost be reduced, and that the power supply device be maintenance free for a long time.

Also, a charge available temperature range of the battery cells 41 is set into a range different from a discharge available temperature range of the battery cells 41. In addition, the discharge available temperature range extends on the low temperature side relative to the charge available temperature range. According to this construction, it is possible to efficiently discharge the battery cells also in the nighttime in which the battery cell temperature generally becomes lower as compared with the battery cell temperature when the battery cell is charged in the daytime.

As shown in Fig. 11, the battery pack 40 is accommodated in a waterproof bag 22 formed of resin, and then accommodated by an outer case 21. The waterproof bag 22 has a box shape that has an opening on one side and can accommodate the battery pack 40. The waterproof bag 22 is formed of a resin material that is excellent in heat dissipation. The waterproof bag 22 can be secured to the interior side of the outer case 21 by using screws, or the like. In the case of Fig. 11, a plurality of metal pipes 23 are arranged orientated in the longitudinal direction of the battery cells. The metal pipes 23 have threaded holes into which screws are threadedly inserted. The pipes 23 are secured to the interior side of the outer case 21 by the screws so that the waterproof bag 22 comes in press contact with and is secured onto an interior surface of the outer case. The pipe 23 has the substantially same length as the longitudinal length of the interior surface of the outer case 22. V-shaped grooves are formed on the outer surface of the waterproof bag 22 for receiving the pipes 23. The outer case 21 includes an upper case 21A and a lower case 21 B that correspond to divided half parts of the outer case 21. The waterproof bag 22 is arranged inside the upper case 21A and the lower case 21 B. As shown in Figs. 10 and 11, a charge/discharge controlling portion 50 is arranged in a lower part of the waterproof bag 22. The charge/discharge controlling portion 50 controls charging/discharging operation of the battery cells 41.

### (Charge/Discharge Controlling Portion 50)

The charge/discharge controlling portion 50 properly controls charging current and charging voltage when the battery pack 40 is charged/discharged with by electric power generated by the solar panel 10. In particular, the generated electric power amount of the solar panels 10 substantially varies depending on weather conditions, seasons, the time of day, and the like. The battery cells 41 can be properly charged in accordance with the generated electric power amount, which constantly varies.

The charge/discharge controlling portion also controls output current and voltage when the charged electric power energy is discharged. Known methods can be suitably employed for charging/discharging operation. For example, in order to prevent that the battery pack is over-charged, a pulse charging method can be employed. The charging voltage of the battery cell is determined depending on the number of the serially-connected battery cells to be used. The charging voltage of the battery cell is preferably set at a voltage lower than the criterion voltage by which to determine whether said battery cell is fully-charged based on of the previously investigated characteristics of said battery cell. In this case, the battery cells are less likely to be overloaded, and can have a longer life. Therefore, it is possible to provide a maintenance-free power supply device. For example, in the case where lithium-ion rechargeable batteries are used as the battery cells, when the charging voltage is not set at conventional voltage of 4.2 V/cell but at lower voltage of 4.0 V/cell, the battery cells can have a longer life. Therefore, the replacing cycle of the battery pack can be longer.

Discharging operation can be controlled in a PWM manner. In this case, the lighting brightness and power consumption can be adjusted by adjustment of the pulse width and the duty ratio in discharging operation. In particular, in the case where the illumination adjustment of LED is controlled in a PWM manner, adjustment of the duty ratio of PWM can easily suppress the illumination variation caused by battery voltage variation in accordance with the depths of discharge of the battery cells. As compared with illumination adjustment controlled by a transformer or the like, electric power can be efficiently supplied. Therefore, it is possible to surely provide long lighting ON time.

The charge/discharge controlling portion 50 can switches between charging operation and discharging operation of the battery cell 41 based on the voltage of the solar panel 10. That is, after sunrise, when the voltage of the solar panel 10 will rise, the battery cells 41 are started being charged. Also, at sunset, when the voltage of the solar panel 10 will drop, the battery cells 41 can be switched from the charging mode to the discharging mode, and start driving the lighting portion 4.

Since the charge/discharge controlling portion 50 is accommodated in the battery box 20, the temperature of the battery cells 41 or the like can be easily controlled, and in addition to this, it is possible to avoid that signal wire lines for controlling the charging/discharging operation of the battery cells 41 and the like are externally exposed. In particular, since the wiring distance of wire lines as main wire lines can be minimized which connect the solar panels 10 to the battery cells 41, it is possible to suppress rubbing wear caused by wind and the like, and failures such as poor contact, disconnection and the like. Therefore, it is possible to provide stable and reliable construction with excellent weather resistance.

### (Battery Holder 42)

The battery cells 41 are accommodated in the battery holders 42 as shown in Figs. 11 to 13. Each of the battery holders 42 includes two parts that correspond to divided half parts of the battery holder. The cylindrical battery cells 41 are interposed between the two parts of the battery holder so that the exterior parts of the cylindrical battery cells 41 are completely covered by the battery holder. The end surfaces of the battery cells 41 are connected to each other by the lead plates 43 in the end surfaces of the battery holder 42. The battery holders 42 are secured to each other by threaded engagement of screws, or the like. It is preferable that the battery cells 41 accommodated in the battery box 20 be arranged in one layer or not more than two layers in the thickness direction of the battery box. This arrangement facilitates spreading of heat from the back surface of the solar panel 10 to whole the battery pack 40. In addition, heat of the battery cells 41 can also be effectively cooled. In the example of Fig. 9, the battery cells 41 in two layers are arranged in an offset arrangement. Accordingly, the battery cells 41 are arranged in roughly one and half layers. As a result, the thickness of the battery box 20 can be thin.

Since the battery cells 41 in two layers are arranged in an offset arrangement, the interval between the battery cells 41 adjacent to each other can be easily adjusted to a desired interval as compared with the case where the battery cells 41 are arranged in one layer, or the case where the battery cells 41 are arranged in matrix in two layers with the central axes of the end-side battery cells agreeing with each other. As a result, the battery box 20, and battery pack 40 can be suitably dimensioned.

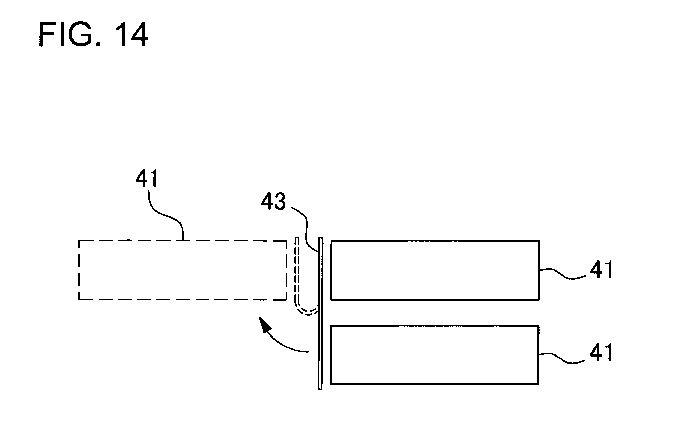

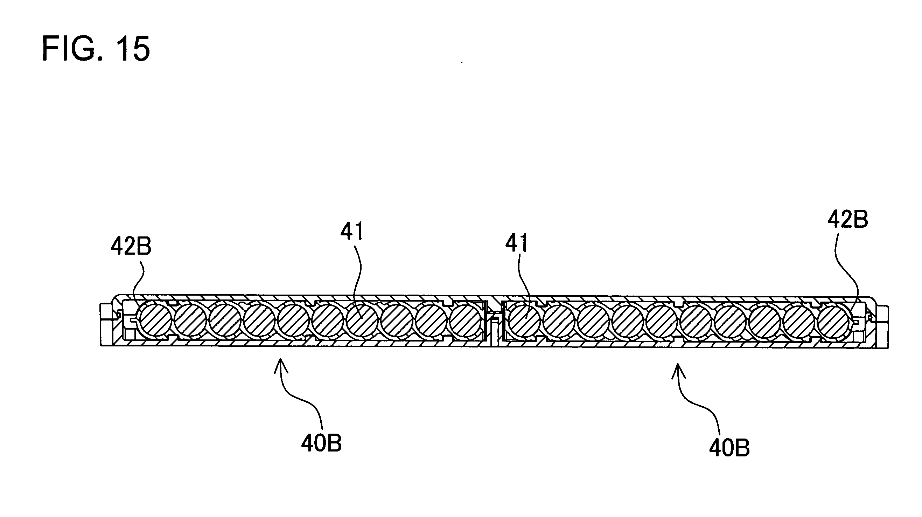

In exemplary connection shown in Fig. 9, eight battery cells are arranged in the two layers so that battery cells in one layer are arranged between battery cells of the other layer. Totally, sixteen cells are connected to each other in parallel. In addition, as shown in Fig. 13, four battery holders 42 are connected to each other in serial in the longitudinal direction. Thus, four cells are connected serially to each other. Two battery pack portions 40 shown in Fig. 13 are prepared, and are electrically connected to each other in parallel. Thus, the battery box 20 shown in Fig. 9 of the battery pack portions 40 shown in Fig. 11 is constructed. The thus-constructed battery cells 41 are electrically connected to each other in four-serial and thirty-two-parallel connection, and are charged/discharged. The number of battery cells may be suitably adjusted which are connected to each other in parallel (for example, twenty-six-parallel connection). Also, the number of battery cells may be suitably adjusted which are connected to each other in serial. Such adjustment can be achieved by changing the battery holder 42, or the like. When the battery cells are serially connected to each other, as shown in the cross-sectional view of Fig. 14, the uppers-side cells and the lower-side cells are connected to each other by the lead plate 43, and the lead plate 43 is then bent 180 degrees (folded). Since the battery cells 41 are thus arranged in not more than two layers, all of the battery cells 41 face the front-side or rear-side surface of the battery box. As a result, the battery cells 41 can be efficiently cooled through the front-side and rear-side surfaces. Needless to say, the battery cells 41 can be arranged in one layer as shown in a modified embodiment of Fig. 15. In this modified embodiment, ten-parallel connection battery holders 42B are used, while two battery pack portions 40B are connected to each other in parallel. In this modified embodiment, the battery cells 41 can be connected in four-serial and twenty-parallel connection.

### (Battery Cover 12)

As shown in Fig. 4, the battery cover 12 covers the outside of the battery box 20. Since the battery box 20 is covered by the battery cover 12, the battery box 20 can be protected from wind, rain, snow, birds and the like. In addition to this, the battery cover 12 provides an integral outward appearance of the battery box 20 and the solar panel 10. In particular, it is preferable that the battery cover 12 partially cover the support pole 2. In particular, in the case where the support pole 2 covering part of the battery cover is inclined, it is possible to reduce air resistance of wind blowing upward from the lower side. Therefore, the solar panel 10 can be stably supported. The battery cover 12 is formed from a metal plate that is excellent in heat dissipation and durability, such as sheet metal. In this embodiment, since both the battery box 20 and the battery cover 12 are formed from metal plates, the metal plate surfaces can serve as a heat radiating plate. Therefore, this construction has an advantage of cooling the battery packs 40 accommodated inside the battery box 20 and the battery cover 12 by air. In particular, solar panels are often installed in an elevated place. Accordingly, in the case where the battery cover 12 is arranged in an elevated place and is exposed outside air, it is possible to suppress temperature rise in summer. According to this construction, it is possible to provide an air-cooled solar battery power supply device that uses natural wind. Therefore, it is possible to provide an environmentally friendly independent system that does not use fossil fuel.

### (Attachment Structure)

The battery box 20 is a member separated from the solar panel 10. The battery box 20 has an attachment structure for detachable attachment of the battery box 20 onto the back surface of the solar panel 10. In the example of Figs. 5 to 8, two sets of metal attachment portions 30 as attachment structure are arranged at two, right and left parts on each of the upper and lower ends of the battery box 20. A free end side of upper metal attachment portion 31 is bent into a rectangular U shape as viewed in section as shown in Fig. 6. Thus, this upper metal attachment portion 31 serves as a rectangular U-shaped part 37. A free end side of the lower metal attachment portion 30 is bent, in the opposite direction to the rectangular U shape of the rectangular U-shaped part 37, into an L shape as viewed in section. The lower metal attachment portion 30 is secured to the battery box 20. The upper metal attachment portion has a circular hole 33, and a slit 34 that extends upward from the circular hole 33 and has a width narrower than the diameter of the circular hole 33. The circular hole 33 and the slit 34 serve as interlocking opening.

As shown in Fig. 5, rectangular U-shaped part interlocking openings 38 are formed at positions of the back surface of the base portion 3 corresponding to the upper metal attachment portions 31. The rectangular U-shaped part interlocking opening 38 is a rectangular opening, and receives the rectangular-U-shaped bent part of the metal attachment portion 31. Furthermore, fixing screws 36 as interlocking protrusions screwed. The fixing screws 36 are inserted into the circular holes 33, and are then slide along the slits 34. The screw heads of the fixing screws 36 are screwed so that the upper metal attachment portions are fixed onto the back surface of the base portion. Since the rectangular-U-shaped part interlocking opening 38 receives rectangular U-shaped part 37 so that the interlocking opening is hung on the interlocking protrusion, the coupling structure can be very simple. As a result, failures or malfunctions can be remarkably reduced. Therefore, it is possible to provide a maintenance-free structure or reliable structure that can be used for a long time. When the battery cells are replaced in an elevated place, the battery cells can be temporarily held by hanging the interlocking openings on the interlocking protrusions. Accordingly, the battery cells can be prevented from falling in replacement. It is possible to improve the workability.

The lower metal attachment portion 32 has a second slit 35 as shown in Figs. 7 to 8. Screws engage with threaded holes in the back surface of the solar panel 10. The screw heads of the screws are screwed so that the lower metal attachment portions are fixed onto the back surface of the solar panel 10. According to this attachment structure, the battery box 20 can be easily attached/detached onto/from the back surface of the solar panel 10. Replacement, maintenance and the like of the battery box 20 can be easy. In particular, in applications such as street light in which the battery box 20 is arranged in an elevated place, this structure for easy attachment/detachment is advantageous in attachment or replacement of the battery box.

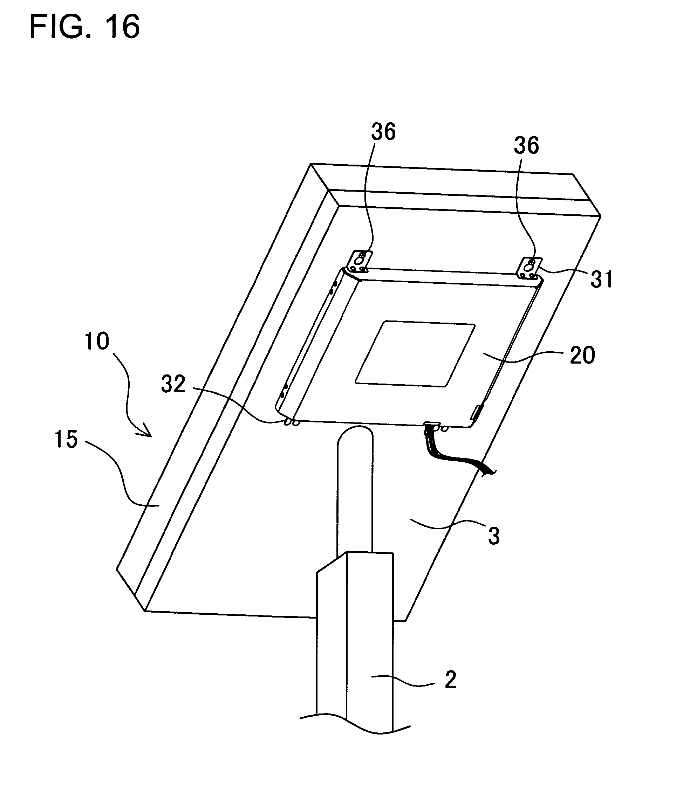

The aforementioned attachment structure has been described as an exemplary attachment structure. Needless to say, other attachment structure can be suitably used. For example, the battery box 20 can be hooked on the back surface of the solar panel 10 by hook-shaped protrusions or interlocking portions. In addition, the battery box 20 can be attached onto the back surface of the solar panel 10 by combination of hooks and loops, L-shaped metal attachment portions, screws and the like. Known structures for detachable attachment can be suitably used including the aforementioned structures. For example, in a modified embodiment shown in Fig. 16, the interlocking structure for interlocking the rectangular U-shaped part onto the rectangular U-shaped part interlock opening is omitted so that a hanger-type attachment structure is employed which only includes an interlocking protrusion and an interlocking opening into which the interlocking protrusion can be inserted. According to this construction, the attachment mechanism can be simplified. However, in the case where the interlocking structure for interlocking the rectangular U-shaped part onto the rectangular U-shaped part interlock opening is provided, the coupling strength can be increased. In particular, from the viewpoint of reliably holding the battery box 20, which is relatively heavy, for a long time, it can be said that the double attachment structure as shown in Fig. 5 is preferably provided.

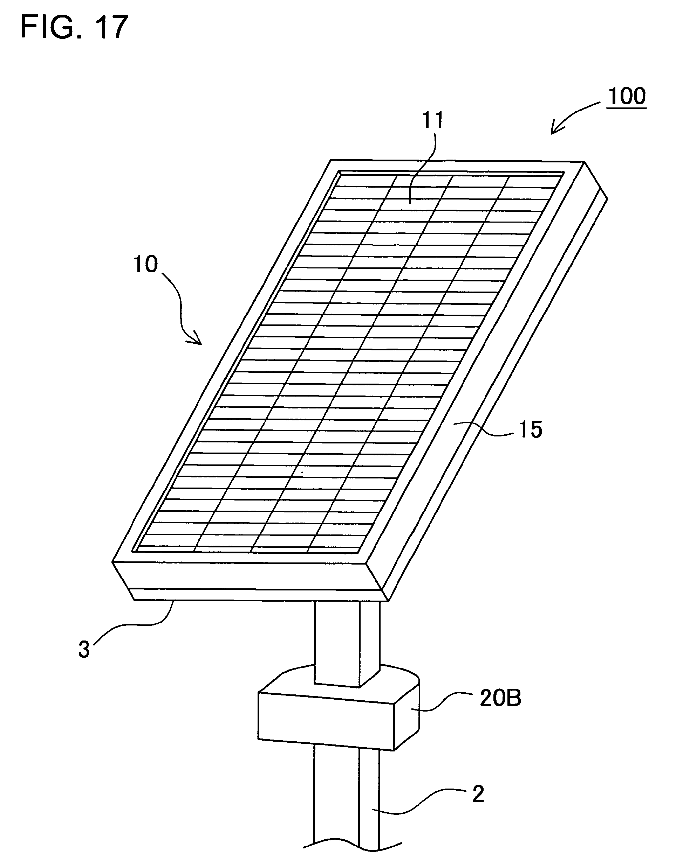

Although, in the foregoing embodiment, the low box-shaped battery box has been described that is attached onto the back surface of the base portion, the battery box may be arranged spaced away from the base portion. In a solar battery power supply device according to a reference example shown in Fig. 17, the battery box 20B is fastened to a middle part of the support pole 2. In the case where the battery box 20B is fastened to a position lower than the solar panel 10, there is an advantage that the battery can be easily replaced.

Since conventional solar battery power supply devices have storage batteries inside a solar panel case, the storage batteries cannot be easily replaced. The life of storage batteries is limited. In particular, conventional nickel-cadmium batteries have relatively short life, and are necessarily replaced. Accordingly, time and effort, or cost for the replacement is a burden. Contrary to this, the battery box 20, which includes the battery cells 41, is constructed as a battery cell unit, and is detachably attached to the solar panel in this embodiment. Accordingly, battery cells 41 can be smoothly replaced. Therefore, it is possible to improve the maintenance workability.

### (Lighting Portion 4)

After the battery pack 40 is charged with energy generated by the solar panel 10, the battery pack 40 is discharged to drive the lighting portion 4 shown in Fig. 1. The power consumption of the lighting portion 4 is preferably low. Light emitting diodes (LEDs) can be used for the lighting portion 4, for example. As compared with fluorescent lamp and the like, the power consumption of LED is low. LEDs can be lighted even by a small amount of electric power for longer hours as compared with fluorescent lamp and the like. As compared with filament lamp and the like, LEDs hardly burns out. Replacement of LEDs can be virtually eliminated. Therefore, in the case where LEDs are used for the lighting portion, the lighting portion can be maintenance-free for a long time. The LEDs are lighted not only constantly or continuously but also can be driven in a pulse driving manner or blink. For example, if the remaining capacity of the battery pack 40 is low, the driving operation of the LEDs can be switched from a constant driving manner to a pulse driving manner whereby increasing illumination time. The ON/OFF frequency in the pulse driving manner is preferably set at a high frequency that is not perceivable by human eyes (e.g., about 10 to 50 Hz). In the case where the LEDs are driven in a pulse driving manner, the power consumption can be suppressed. In particular, when the number of hours of sunshine is small in winter, or when cloudy or rainy days continue, the pulse driving manner is useful for increasing illumination time. The battery cell can be charged with electric power generated only by sunlight. Even if the sun is continuously obscured by clouds, rain, and the like, in the case where the LEDs are driven in a pulse driving manner, it is possible to avoid or suppress that electric power stored in the battery cells becomes too low to drive the LEDs at night.

This street light is useful as a light that is lighted at night in environments where commercial power is not available or is hard to be accessed (e.g., mountain-ringed region, and uninhabited island). In such use, it is preferable that the street light be maintenance-free. Accordingly, the long life battery cells and the long life lighting portion are preferably used. For example, lithium-ion rechargeable batteries are used as the battery cell. In this case, even a smaller number of battery cells can be charged with high electric power and can be discharged at high electric power. In addition, in the case where the current and voltage of the rechargeable batteries are set lower than the rated values when the rechargeable batteries are charged/discharged, it is possible to reduce the burden of the rechargeable batteries and as a result to increase the life of the rechargeable batteries. Also, in the case where light emitting diodes (LEDs) are used for the lighting portion, the power consumption of the LEDs is lower as compared with filament lamp or the fluorescent light. In addition, the light emission life of LEDs is the not less than 10,000 hours. Therefore, LEDs are preferable very much. The reason is that LEDs can provide a maintenance-free street light.

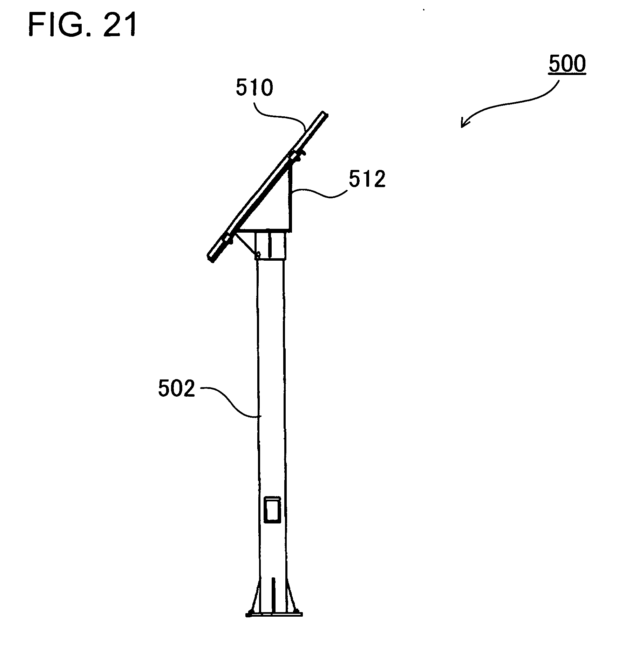

In order to efficiently receive sunlight, it is necessary to hold the light-receiving surface of the solar panel 10 in an inclined orientation. Accordingly, it is necessary to arrange the solar panel in an inclined orientation relative to the support pole which extends upright from the ground. In a known solar battery power supply device disclosed in Patent Literature 1, as illustrated in a solar battery power supply device 500 shown in Fig. 21, a triangular prism-shaped accommodation member 512 has a triangular as viewed from the side surface, and is arranged on the back surface of a solar panel 510. The bottom surface of the accommodation member 512 is fastened to a support pole 502. Thus, the solar panel 510 is held at an inclined orientation. In addition, a storage battery is accommodated in the accommodation member 512. In this construction, since the accommodation member 512 protrudes from the back surface of the solar panel 510, there is a problem that the exterior shape of this solar battery power supply device is large. In particular, solar panels are often installed in an elevated place in order to efficiently receive sunlight. However, solar panels installed in an elevated place are likely to be affected by wind. If a solar panel has a protruding part, the solar panel will be likely to receive a strong wind force. For this reason, this solar panel necessarily has a sufficient strength. As a result, the cost of this solar panel will be high.

Contrary to this, in this embodiment, fastened onto the back surface of the solar panel 10 having a flat shape is the battery box 20 also having a flat shape. According to this construction, the solar battery power supply device can have a flat shape as a whole. In addition, since the protrusion parts are minimized, air resistance of wind can be reduced. Additionally, the solar battery power supply device can have an integral shape as a whole.

On the other hand, battery cells are relatively heavy. In addition, it is necessary to periodically replace battery cells. For these reasons, battery boxes are occasionally fastened to not the top end but to a middle part of the support pole in conventional solar battery power supply devices. However, in the conventional arrangement, water comes into the battery box earlier than the solar panel in case of disaster such as flood and tsunami. For this reason, a problem may arise when the solar battery power supply devices serve as an emergency light. Also, if the battery box is embedded in the snow, the battery cells will be cooled too much and may not be charged. Contrary to this, in this embodiment, since the battery pack is arranged at the same height as the solar panel 10, these risks can be low. In particular, in the case where the battery pack is composed of rechargeable lithium-ion batteries, which have a higher voltage per volume as compared with conventionally used nickel-cadmium batteries, the weight of the battery pack can be reduced relative to battery packs composed of nickel-cadmium batteries. In addition, in the case where light emitting diodes, which have low power consumption, are used as the lighting portion instead of conventional filament lamps or fluorescent lamps, the required voltage can be further reduced. Accordingly, it is possible to further reduce the number of the required battery cells for the battery pack, and to reduce the weight of the battery pack. As a result, it is possible to a panel-shaped solar battery power supply device having a suitable solar battery and a storage battery that are integrally designed and meet the aforementioned specification.

Also, according to this construction, the battery cells accommodated in the battery box can be warmed with heat from the solar panel when the solar panel is warmed by sunlight. As a result, there is an advantage that the charging efficiency can be improved particularly in winter. That is, if the temperature of battery cells becomes low, the charging efficiency generally decreases. In the arrangement where the battery cells are arranged on the back surface of the solar panel, since the solar panel is arranged on the sunlight-incident surface side in general. Accordingly, the battery cells are arranged in the shade. For this reason, the temperature of the battery cells is likely to be low. The number of sunlight hours is short in winter. Accordingly, the amount of electric power generated by the solar panel is small in winter. As a result, the amount of electricity that can charge the battery cells (electricity storage amount) is likely to be low in winter. If the electricity storage amount is short, lighting time in night will be short. In particular, if rainy days continue, the lighting portion may not be lighted. To address this, in this embodiment, the battery box is arranged on the back surface of the solar panel in parallel to each other so that the battery pack accommodated in the battery box is arranged close to the solar panel. According to this arrangement, the battery cells can be warmed with heat from the solar panel. The battery cell can be warmed by radiant heat by using heat of the solar panel without wasting electric power consumed by a heater, or the like. As a result, it is possible to improve the efficiency of charging the battery cells, and to provide a system that effectively uses waste heat. In addition, since heat of the solar panel can be thermally conducted to the battery cells, deterioration of the solar panel due to heat can be also reduced.

It is preferable that the battery pack be not in direct contact with the solar panel, but be spaced away from the solar panel. In this embodiment, the battery pack 40 is held by the battery holders 42, and is accommodated in the waterproof bag 22. Thus, the battery pack 40 is thermally coupled to the solar panel 10 through the waterproof bag 22 and the exterior case 21. According to this arrangement, it is prevented that the battery pack 40 is directly thermally coupled to the solar panel 10. As a result, it is possible to suppress that the battery pack 40 is over-heated by the solar panel 10. Generally, the charging efficiency will be high in the case where the temperature of battery cells is high. However, if the temperature of battery cells is too high, high temperature may cause inverse influences on the battery cells (e.g., battery cell characteristic deterioration). Particularly, in summer, the temperature in the battery box will be high, which may bring the battery cells to an over-heated state. To prevent this, the battery pack is spaced away from the solar panel. A thermally insulating member can be interposed between the battery pack and the solar panel to provide a thermally insulating effect.

In addition, the cylindrical battery cells 41 are arranged in the longitudinal direction, in other words, the cylindrical rechargeable batteries are arranged in an upright orientation. According to this arrangement, gaps between the cylindrical rechargeable batteries can extend in the vertical direction so that air-flowing paths can be formed in the vertical direction. Accordingly, convection of air can be produced in the battery box by heat. Heated air flows through the air-flowing paths toward the upper part of the battery box. The heated air will be cooled in the upper part. The cooled air will flow downward through the periphery of the battery pack 40. Thus, air can circulate. As a result, it is possible to provide an effect of suppressing overheating. In addition to this, since the battery box is formed of a metal having a good thermal conductivity, it is possible to provide an effect of dissipating heat into the atmosphere through the battery box having good heat dissipation. Also, since the battery box is held in an elevated place by the support pole, the battery box is likely to be subjected to wind. As a result, it can be expected that this arrangement provides effects of dissipating heat and cooling the battery cells. Additionally, since the battery cells are arranged in the shade as discussed above, it is also possible to provide an effect of suppressing overheating.

In addition, for the purpose of facilitating convection in the battery box, the battery cells may be arranged so that the temperature difference can be caused between the upper and lower sides of the battery pack. For example, the battery cells can be arranged in the longitudinal direction to adjust the distance between the battery cells and the solar panel so that battery cells on the lower side are close to the solar panel, while battery cells on the upper side are spaced away from the solar panel. According to this arrangement, the temperature of the battery cells on the lower side can be high, while the temperature of the battery cells on the upper side can be low. As a result, it is possible to achieve the purpose of causing the temperature difference in the longitudinal direction. Therefore, it is possible to facilitate natural convection of air in the battery box. Alternatively, in the arrangement where the battery cells are arranged in parallel to each other, the battery cells on the upper side can have a large gap between adjacent battery cells, while the battery cells on the lower side have a small gap between adjacent battery cells. According to this arrangement, it can be also expected that the temperature difference arises between the battery cells on the upper and lower sides.

Alternatively, the battery pack may be spaced away from the solar panel. According to this arrangement, since air layer can be interposed between the battery pack and the solar panel, it is possible to promote the thermally insulating effect. For example, the thickness of the battery box can be larger than the thickness of the battery pack. The battery cells are fastened onto the back surface side of the battery box, while the other surface side opposed to this cell fastening surface serves as a panel fastening surface onto which the back surface of the solar panel is fastened. According to this construction, when the battery box is fastened to the solar panel, space can be easily formed between the battery pack and the solar panel. In addition, in the case where gaps between cylindrical battery cells adjacent to each other are increased in the thickness direction, it is possible to increase the cross-sectional areas of the air-flowing paths through which air is flown by natural convection and cools the battery cell in the battery box.

It is noted that the size of the solar panel 10 does not necessarily completely agree with the size of the battery pack 40 or the battery box 20, which accommodates the battery pack 40. The number of the battery cells 41 that compose the battery pack 40 can be determined depending on the battery capacity, voltage, and the like, that are required by a load to be connected or specifications. It is not necessary that the number of battery cells be sufficient to cover the entire back surface of the solar panel. Even in this case, when the battery pack is arranged on the back surface of the solar panel, it is possible to provide an effect of warming the battery pack with heat from the solar panel as discussed above. Even if the size of the battery pack or the battery box that accommodates the battery pack is smaller than the solar panel, it is only required to be arranged the battery pack or the battery box, and the solar panel in parallel to each other. The term "the distances between the parts of the solar panel and the battery pack are substantially fixed" refers to that the intervals between the solar panel and the battery pack are fixed even if the solar panel and the battery pack have different areas.

In the case where the surface area of the solar battery is large, or in the case where the attachment amount of battery cells is large relative to the surface area of the solar battery, influences of wind pressure on the solar battery portion will be large. In this case, it is desirable that a plurality of battery cells be provided, and that the support pole 2 be arranged and interposed between the battery cells at least in a horizontal direction perpendicular to the inclination direction of the solar battery. According to this construction, the moment on the support pole 2 produced by wind can be controlled.

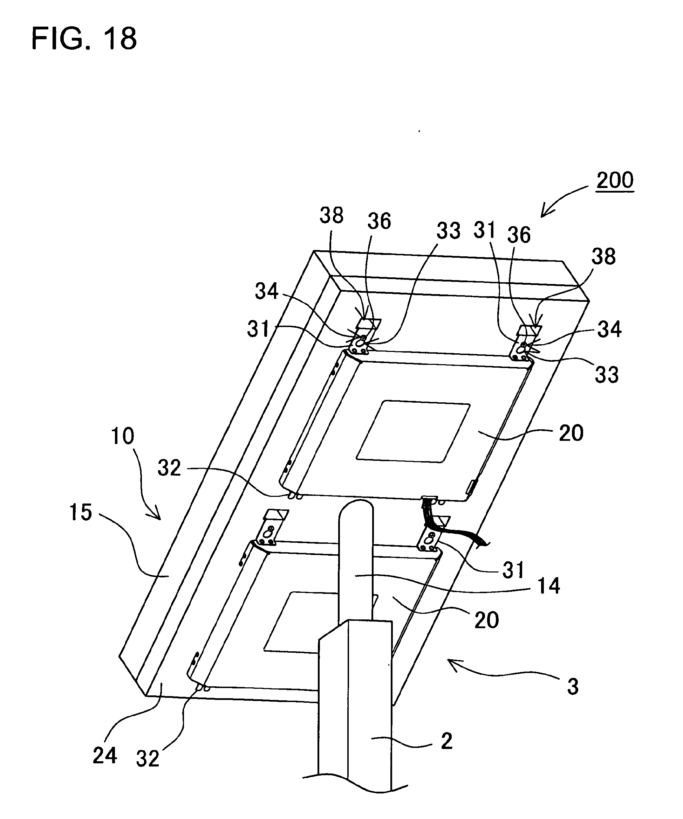

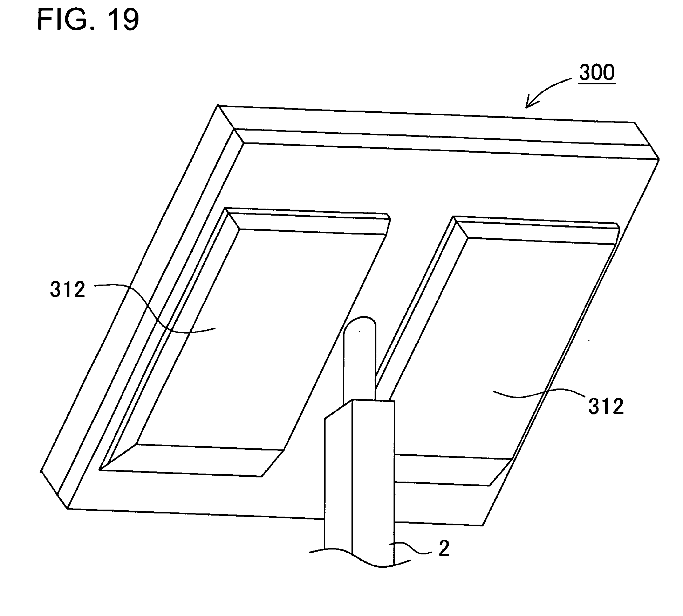

In the foregoing embodiment, one battery box 20 has been described which is secured onto the back surface of the solar panel 10 as shown in Fig. 5. However, the present invention is not limited to this construction. For example, as shown in a solar battery power supply device 200 shown in Fig. 18, two battery boxes 20 can be vertically arranged on upper and lower parts of the solar panel 10 relative to the support pole 2. Alternatively, three or more battery boxes can be arranged on the solar panel. Alternatively, the battery box can be arranged in a landscape orientation. Fig. 19 shows a solar battery power supply device 300 according to a modified embodiment. In the solar battery power supply device 300, two battery covers 12 for covering battery boxes are arranged in a portrait orientation on the solar panel. The two battery covers 312 are horizontally arranged side by side. In this embodiment, the support pole 2 is arranged at the center of the solar panel. The two battery covers 312 are arranged on the right and left sides of the support pole 2.

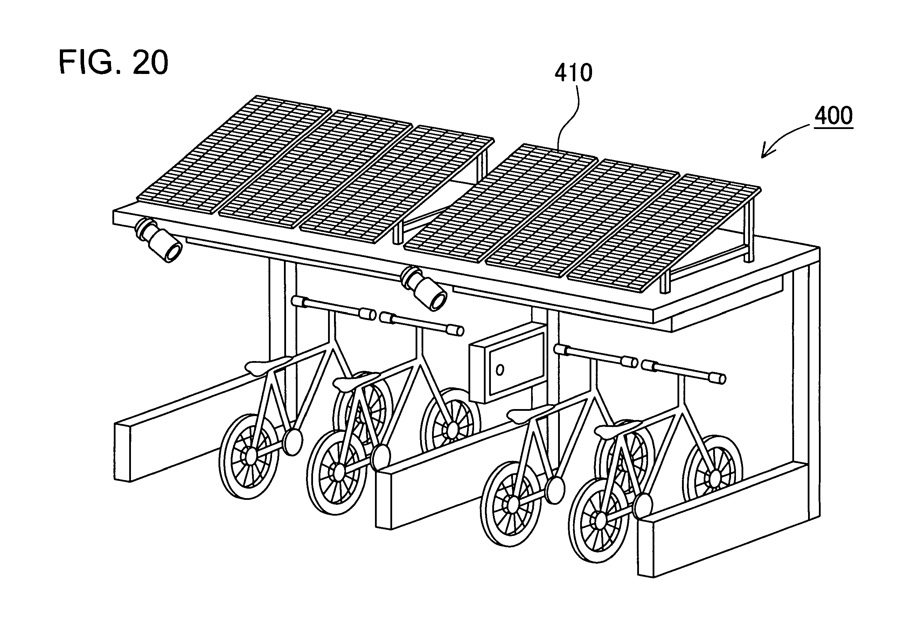

Although it has been described to apply the solar battery power supply device according to the foregoing embodiment to a street light, the present invention is not limited to this. A solar battery power supply device according to the present invention can be applied to power supply devices using solar energy. Fig. 20 shows a solar battery power supply device 400 according to another embodiment. The solar panels 410 are arranged on the roof of a bicycle shed. This solar battery power supply device 400 can be suitably used as a charging device for charging batteries of power assisted electric bicycles. In this embodiment, in order to charge batteries not only in nighttime but also in daytime, the solar battery power supply device detects whether a load (i.e., a battery of a power assisted electric bicycle) is connected to the solar battery power supply device. When detecting the battery connection, the solar battery power supply device controls charging operation so that the battery can be charged. When any power assisted electric bicycle battery is not connected in daytime, the solar battery power supply device charges the battery pack for storing electricity as a preparation to charge batteries in nighttime or in weak sunshine conditions in daytime.

According to the aforementioned construction, it is possible to provide an independent power supply device that can be used without connection to commercial power. In particular, even in the event of disaster or the like where commercial power is not available, the aforementioned power device can supply electric power. Accordingly, the aforementioned power device can be suitably used as an emergency power supply such as emergency light and an emergency power device. Also, since the aforementioned power device does not consume fossil fuel, the aforementioned power device can be used suitably as environmentally friendly, ecological power supply.

### Industrial Applicability

A solar battery power supply device according to the present invention can be suitably used for an independent lighting apparatus, a charging device for charging batteries of power assisted electric bicycles without requirement for commercial power.

### Reference Signs List

- 100, 200, 300, 400: Solar battery power supply device
- 2: Support pole
- 2C: Cylindrical coupling portion
- 3: Base portion
- 3A: Opening
- 4: Lighting portion
- 10, 410: Solar panel
- 11: Panel portion
- 12, 312: Battery cover
- 13: Protruding portion
- 14: Coupling portion
- 15: Outer frame
- 16: Another opening
- 20, 20B: Battery box
- 21: Exterior case
- 21A: Upper case
- 21B: Lower case
- 22: Waterproof bag
- 23: Pipe
- 24: Plate
- 30: Metal attachment portion
- 31: Upper metal attachment portion
- 32: Lower metal attachment portion
- 33: Circular hole
- 34: Slit
- 35: Second slit
- 36: Fastening screw
- 37: Rectangular U-shaped part
- 38: Rectangular-U-shaped part interlocking opening
- 40, 40B: Battery pack
- 41: Battery cell
- 42, 42B: Battery holder
- 43: Lead plate
- 50: Charge/discharge controlling portion
- 500: Solar battery power supply device
- 502: Support pole
- 510: Solar panel
- 512: Accommodation member

## Claims

1. A solar battery power supply device comprising:
a battery pack including a plurality of battery modules that are arranged in parallel to each other, each of the plurality of battery modules including a plurality of rechargeable battery cells that are serially connected to each other and arranged in the longitudinal direction of the rechargeable battery cell;
a flat battery box that accommodates said battery pack; and
a solar panel that includes a plurality of solar cells capable of generating electric power for charging said battery pack;
wherein said battery box is arranged on the back surface of said solar panel,
wherein said solar panel and said battery pack are arranged substantially in parallel to each other so that the distances between the parts of the solar panel and said battery pack are substantially fixed,
wherein the battery modules of said battery pack are held in a non-horizontal orientation.

2. The solar battery power supply device according to claim 1 further comprising a support pole that holds said solar panel in an inclined orientation,
wherein said battery box is fastened to a part of the back surface of said solar panel positioned higher than the attachment position of said support pole in the back surface of said solar panel.

3. The solar battery power supply device according to claim 1 or 2, wherein not more than two layers of battery modules are arranged as said battery modules of the battery pack in the thickness direction of said battery box.

4. The solar battery power supply device according to any of claims 1 to 3 further comprising a base portion, wherein said solar panel and said battery box are fastened onto the upper and lower surfaces of the base portion, respectively.

5. The solar battery power supply device according to claim 4, wherein a fastening mechanism that detachably attaches said battery box to the back surface of said base portion.

6. The solar battery power supply device according to claim 5, wherein said fastening mechanism includes a rectangular U-shaped part that has a rectangular U shape as viewed in section and is fastened to the upper surface of said battery box, and a rectangular U-shaped part interlocking opening that is opened in the back surface of said base portion and dimensioned to interlock with the rectangular U-shaped part,
wherein said battery box is detachably fastened to said base portion by said fastening mechanism.

7. The solar battery power supply device according to claim 5 or 6, wherein said fastening mechanism is a hanger mechanism that includes an interlocking protrusion and an interlocking opening, wherein the interlocking protrusion is inserted into the interlocking opening,
wherein the hanger mechanisms are arranged as said fastening mechanism at the four corner parts of said battery box, wherein said battery box can be detachably fastened to said base portion by the hanger mechanisms.

8. The solar battery power supply device according to any of claims 4 to 7 further comprising a battery cover that covers said battery box with said battery box being fastened onto the back surface of said solar panel.

9. The solar battery power supply device according to any of claims 1 to 8, wherein said battery box is formed of a metal having good thermal conductivity.

10. The solar battery power supply device according to any of claims 1 to 9, wherein the inclination angle of said solar panel is greater than an installation angle that provides the maximum annual electric power generation amount at the installation place of this solar battery power supply device.

11. The solar battery power supply device according to any of claims 1 to 10 further comprising a charge/discharge control portion that controls a charging current or a charging voltage for charging said battery pack with electric power generated by said solar panel.

12. The solar battery power supply device according to any of claims 1 to 11 further comprising a lighting portion that is driven by said battery pack.

13. The solar battery power supply device according to claim 12, wherein said lighting portion includes light emitting diodes.

14. The solar battery power supply device according to claim 13, wherein said lighting portion is a street light.

15. The solar battery power supply device according to any of claims 1 to 14, wherein the charging voltage for charging said battery cell is set at a voltage lower than the criterion voltage by which to determine whether said battery cell is fully-charged based on of the previously investigated characteristics of said battery cell.

16. The solar battery power supply device according to any of claims 1 to 15, wherein said battery cells are lithium-ion rechargeable batteries.

17. The solar battery power supply device according to any of claims 1 to 16, wherein the rated voltage of said battery pack is 0.7 to 0.9 time the maximum output operating voltage of said solar panel at 25°C.

18. The solar battery power supply device according to any of claims 1 to 17, wherein a charge available temperature range of said battery cell is set into a range different from a discharge available temperature range, wherein said discharge available temperature range extends on the low temperature side relative to said charge available temperature range.

19. The solar battery power supply device according to any of claims 1 to 18, wherein said battery cell has a cylindrical exterior shape.
